# EUROPEAN PATENT APPLICATION

(11) **EP 4 286 736 A1**
(43) Date of publication of application: **06.12.2023**
(21) Application number: 22177264.3
(22) Date of filing: 03.06.2022
(51) Int. Cl.: F16P 3/14, C03B 5/00, C03B 17/00

(54) **METHOD FOR IMPROVING SECURITY IN GLASS FORMING MACHINES**

(71) Applicant: VERALLIA PACKAGING, FR-92400 Courbevoie (FR)
(72) Inventor: CENDRON, Andrea, 36077 Altavilla Vicentina (VI) (IT)
(74) Representative: Germain Maureau

(57) **Abstract**

The present disclosure relates to a method for protecting operators controlling a glass forming machine (1), the method comprising: setting a first optical barrier (OB) in an operational state of the glass forming machine, the first optical barrier being arranged in front of at least a part (2) to be protected of the glass forming machine; and triggering a first alert state when the first optical barrier is in the operational state and detects an object across the first optical barrier, the first alert state comprising stopping the part of the glass forming machine.

## Description

### TECHNICAL FIELD OF THE INVENTION

The present invention relates to the field of glass forming and more particularly to forming glass hollow articles such as containers, bottles, drinking glasses and flasks.

### BACKGROUND

A glass forming machine for forming hollow articles generally comprises a plurality of individual glass forming sections. Such a machine is called an IS machine (IS for Individual Section). The glass forming sections may be simultaneously operated and fed from a feeder which discharges individual gobs or charges of molten glass. The gobs of molten glass are distributed by charge distributing means from a feeder outlet to the various sections of the machine. The machine further comprises suitable take-out means for removing the finished ware from a finishing mold of each section and placing it upon a suitable conveyor or other receiving station.

Each glass forming section comprises a blank station for forming a parison from a gob of molten glass and a blow station for forming a glass container from the parison. Further, each glass forming section comprises a transfer mechanism for transferring the parison from the blank station to the blow station.

The blank station can comprise at least one blank mold comprising two blank mold halves. The blank mold halves can be moved back and forth between an open position and a closed position. There may be a neck ring below the blank mold. A gob of molten glass can be brought into the blank mold from above. The upper opening of the blank mold can be closed by a baffle.

The blank station can also include a plunger reachable through the neck ring. The plunger can be movable into and out the blank mold. Thus, the plunger can come along an ascending movement from below through the neck ring moving into the blank mold to pierce a gob of molten glass within the blank mold and when the upper opening of the blank mold is closed, to form a parison.

After forming the parison, the plunger is moved downwards out of the blank mold. Then the upper opening and the blank mold are opened by moving the mold halves to their open position. The parison is then held by the neck ring and transferred to the blow station.

The blow station is configured to form a finished product out of the parison. This is accomplished in three phases: stretching of the parison under its own weight, inflation of the stretched parison, and extraction of the finished product which can be a glass container.

The blow station comprises a blow mold which may consist of two blow mold halves, and a blowing device to blow up a parison in the blow mold. The blow mold may include a double wall, with a gap between an inner wall and an outer wall.

To avoid visible defects arising on the surface of the finished products when the parison is in contact with the blank mold, the latter must be swabbed. This operation is generally performed manually or by a swabbing robot carrying a brush which is dipped in a container of graphitized oil and then used to swab the blank mold.

The glass forming machines forming hollow articles generally present the drawback of offering an insufficient security level to the glass operators controlling the operation of the machines. In fact, there are high risks of finger burning and crushing for the glass operators when they put their hands in the machine, due to high temperatures and moving components inside the machine around the blank and blow molds. To protect the glass operators, there was proposed perforated or grid-like panels to be installed in front of each machine section and that are designed to prevent the operators from unintended access to the moving and hot components of the machine section. Such panels can be removed when the machine or the corresponding section is stopped for maintenance purposes.

However, such panels mask the current operating conditions of the machine, such that operating default cannot be remotely easily seen. In addition, displacements of the panels can be tricky and add additional operations when a maintenance task is to be performed.

Thus, there is a need for protecting glass operators working on a glass forming machine. More particularly, there is a need for preventing unintentional accesses inside a section of a glass forming machine when the section is currently in operation. In addition, the protection of the glass operators should not disturb the maintenance operations or add additional tasks.

### SUMMARY

The present disclosure is related to a method for protecting operators controlling a glass-forming machine, the method comprising: setting in an operational state a first optical barrier of the glass-forming machine, the first optical barrier being arranged in front of at least a part to be protected of the glass forming machine; and triggering a first alert state when the first optical barrier is in the operational state and detects an object, the first alert state comprising stopping the part of the glass forming machine.

Thanks to these dispositions, unintentional accesses inside the glass-forming machine are prevented when the latter is currently in operation, and this result is obtained without masking the operation of the machine to the glass operators. In addition, no physical barrier prevents or impedes maintenance tasks that are to be performed when the machine is in operation.

According to an embodiment, the method further comprises: setting in the operational state a second optical barrier arranged in front of the part to be protected of the glass forming machine, the first optical barrier being disposed between the glass forming machine and the second optical barrier; and triggering a second alert state when the second optical barrier is in the operational state and detects an object.

The provision of two levels of alerts with a warning alert enables to reduce the risks of stopping the glass-forming machine due to an unintentional intrusion into the machine.

According to an embodiment, the second alert state comprises emitting a second alert signal that possibly comprises a dedicated audible signal and/or a dedicated light signal.

In this manner, the operator is warned as soon as second alert state is activated, which enables him to can remove his hand before triggering the first alert state.

According to an embodiment, the second optical barrier is configured to detect objects having a minimum size of 2.5 cm.

In this manner, objects having the size of a human hand can be detected.
According to an embodiment, the first alert state further comprises restarting the glass forming part when no object is detected by the first optical barrier, upon triggering of a reset command of the first optical barrier and/or triggering of a start command of the glass forming part.

Thus, the protection of the glass operators is still achieved when the glass-forming machine is restarted after a detection of an object by the first optical barrier.

According to an embodiment, the method further comprises: setting in the operational state each of optical barriers of an optical barrier set comprising a plurality of optical barriers and the second optical barrier, each optical barrier of the optical barrier set being arranged in front of a respective glass forming section of the glass forming machine and between the second optical barrier and the respective glass forming section; and triggering the first alert state when an object is detected by one optical barrier in the operational state of the optical barrier set, the first alert state comprising stopping the glass forming section corresponding to said one optical barrier.

Thus, the detection of an intrusion does not totally stop the glass-forming machine which remains partially in operation

According to an embodiment, the method further comprises configuring each first optical barrier to detect objects having a minimum size between 1.4 cm and 5 cm.

In this manner, objects as small as a human finger can be detected to trigger the first alert state.

According to an embodiment, the method further comprises a mute state in which the glass-forming machine is in operation and the first alert state is not triggered when an object is detected by the first optical barriers.

According to an embodiment, the method further comprises: activating or deactivating the mute state upon detection of manual action on a switch, or detecting a swabbing robot in a safety zone around the glass forming machine; activating the mute state when the swabbing robot is in the safety zone; detecting that the swabbing robot is out of the safety zone; and setting the first and second optical barriers in the operational state when the swabbing robot is detected out of the safety zone.

In this manner, the operation of the optical barriers does not interfere with the usual maintenance operations of the glass-forming machine.

According to an embodiment, the method further comprises setting the glass-forming machine in a maintenance state, the maintenance state comprising stopping the glass forming machine and setting the first optical barriers in a deactivated state in which the first alert state is not activated when an object is detected by one first optical barrier.

Embodiments may also relate to a system for protecting operators controlling a glass forming machine, the system comprising an optical barrier set comprising at least a first optical barrier, each first optical barrier being arranged in front of an opening of the glass forming machine, and a control unit connected to each optical barrier of the optical barrier set and configured to implement the method as defined above.

According to an embodiment, the optical barrier set comprises at least a first optical barrier disposed in front of an opening of each of glass forming sections of the glass-forming machine.

According to an embodiment, the optical barrier set comprises at least a first optical barrier comprising an emitter and a receiver that are disposed facing each other along opposite sides of an opening of the glass forming machine or along opposite upper and lower sides of an opening of a respective glass forming section of the glass forming machine.

In this manner the length of the optical barriers or the emitters and receivers of the optical barriers are reduced.

According to an embodiment, the optical barrier set comprises a second optical barrier disposed in front of all glass forming sections of the machine, the first optical barrier being disposed between the glass-forming machine and the second optical barrier.

According to an embodiment, the second optical barrier comprises an emitter and a receiver that are disposed facing each other along opposite lateral sides of the opening of the glass-forming machine.

In this manner the length of the optical barriers or the emitters and receivers of the optical barriers are reduced.

According to an embodiment, the system further comprises first optical barriers respectively disposed in front of openings of glass-forming sections of the glass-forming machine, and physical barriers disposed between the glass forming sections.

In this manner, the physical barriers prevent an operator from being accidentally in contact with a functioning mechanical equipment in a section that is not stopped from an adjacent section that is stopped, without crossing the first optical barrier of the section that is not stopped. In addition, the physical barriers prevent an operator operating in a stopped section from accidentally crossing the optical barrier of the adjacent section.

### BRIEF DESCRIPTION OF THE DRAWINGS

The foregoing and other purposes, features, aspects and advantages of the invention will become apparent from the following detailed description of embodiments, given by way of illustration and not limitation, with reference to the accompanying drawings, in which the same reference refer to similar elements or to elements having similar functions, and in which:
Figure 1 is a schematic front view of a glass forming machine equipped with a protecting system for protecting the glass operators of the machine, according to an embodiment;
Figure 2 is a schematic front view of a glass forming machine equipped with a protecting system for protecting the glass operators of the machine, according to another embodiment;
Figure 3 is a schematic partial sectional side view of the glass forming machine of Figure 2;
Figure 4 is a state diagram of the protecting system, according to an embodiment;
Figure 5 is a schematic front view of a glass forming machine equipped with a protecting system, according to another embodiment.
Figure 6 is a schematic front view of a glass forming machine equipped with a protecting system, according to another embodiment.

### DETAILED DESCRIPTION

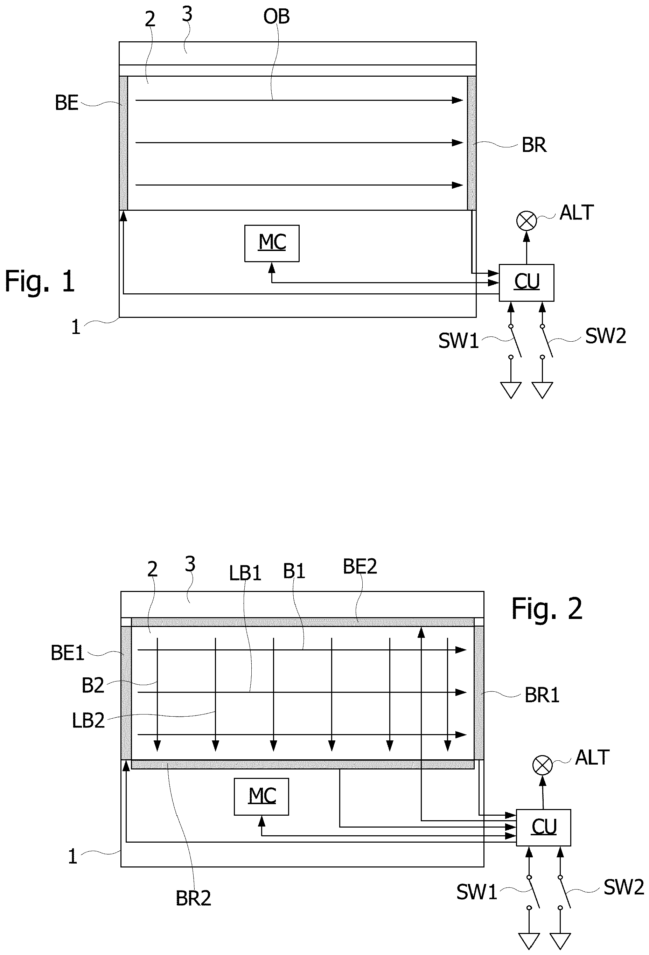

Figure 1 shows a glass forming machine 1 comprising one or more glass forming sections having an opening in a front face 2 of the machine. Each glass forming section comprises a blank station for forming a parison from a gob of molten glass, a blow station for forming a glass container from the parison, and transfer mechanisms for feeding the blank station with gobs, transferring the parison from the blank station to the blow station and for transferring finished glass containers from the blow station. The machine 1 can further comprise a control panel 3 including control buttons to start/stop the machine 1 or sections thereof.

The blank station and blow station generally remain accessible to the glass operators for maintenance purpose from the front face 2 of the machine. However in operation, these stations present crushing and burning hazards for the glass operators.

To protect the glass operators against finger burning and crushing risks, there is provided a protection system comprising an optical barrier OB comprising an optical emitter BE and an optical receiver BR disposed on opposite edges of the opening 2 giving access to an area to be protected, where the crushing and burning hazards are present. The optical emitter BE and receiver BR are connected to a control unit CU, for example comprising a microprocessor or a microcontroller. The control unit CU is connected to a machine control unit MC of the glass forming machine 1 to receive state signals related to the state of the machine 1, and to transmit stop commands to stop the glass forming machine 1. The control unit CU is further connected to switches SW1, SW2 that can be operated by an operator to activate or reset and stop or deactivate the optical barrier B1.

The control unit CU is configured to trigger an alert state when the optical barrier B1 detects an object across the optical barrier OB, i.e., between the emitter BE and the receiver BR. In this alert state, the control unit CU is configured to stop the machine 1 or only a part thereof and/or to emit an alert signal by turning on a warning device ALT, such as a light and/or a device emitting an audible signal. To exit from the alert state and return in an operational state in which the machine 1 is active, none object must be present across the optical barrier OB and the SW1 can be activated to reset the optical barrier OB. To return in the operational state, the operator can be further requested to activate a start button of the machine 1.

Thanks to these dispositions, unintentional accesses inside the glass forming machine 1 are prevented when the latter is currently in operation. In addition, the optical barrier OB is invisible to the glass operators and thus does not mask the operation of the machine 1 and no physical barrier prevents or impedes maintenance tasks that are to be performed when the machine is in operation.

According to the example of Figure 1, the optical emitter BE and receiver BR are disposed facing each other along opposite lateral sides of the opening 2. Since the lateral sides of the opening 2 are smaller than the upper and lower sides thereof, the optical emitter BE and receiver BR can thus have a shorter length than if they were installed along the upper and lower sides.

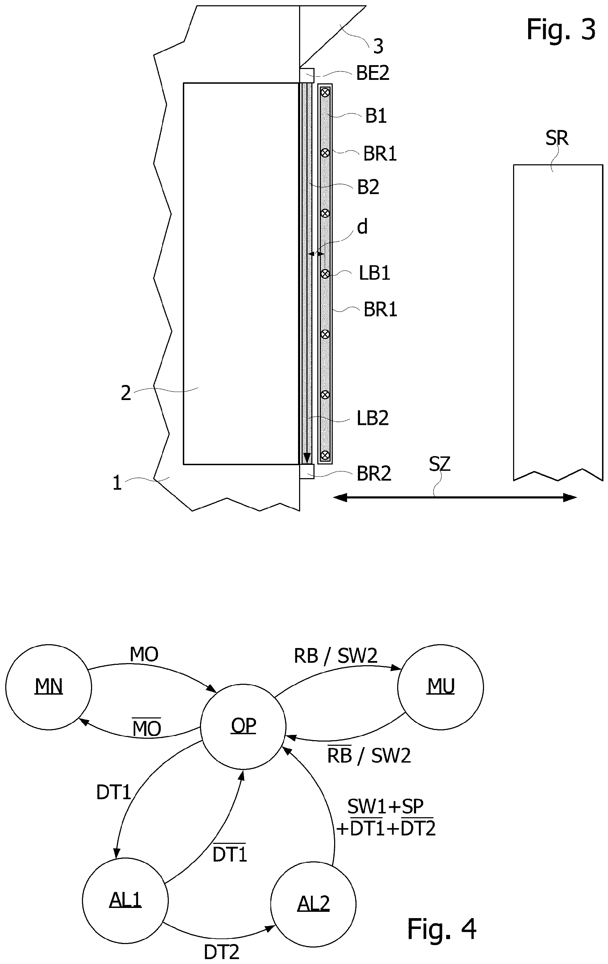

Figures 2 and 3 show the glass forming machine 1 equipped with optical barriers B1, B2, according to another embodiment. Each of the optical barriers B1, B2 comprises an optical emitter BE1, BE2 and an optical receiver BR1, BR2 disposed on opposite sides of the opening 2 of the area to be protected. According to the example of Figures 2 and 3, the optical emitter BE1 and receiver BR1 are disposed facing each other along opposite lateral sides of the opening 2, respectively, and the optical emitter BE2 and receiver BR2 are disposed along the upper and lower sides of the opening 2, respectively. The optical emitters BE1, BE2 and receivers BR1, BR2 are connected to the control unit CU.

According to an embodiment, the optical barrier B2 is disposed between the area opening 2 and the optical barrier B1, at a distance d from the barrier B1. The distance d can be set to a value between 7 and 15 cm. According to an embodiment the distance d is greater in the lower part of the barriers that in upper part.

The optical barrier B1 can be adjusted to detect objects having a minimum size of 2.5 cm and, for example to detect a human hand. The optical barrier B2 can be adjusted to detect objects having a minimum size between 1.4 cm and 3 cm, for example to detect a human hand finger.

The optical barriers B1, B2 can be of the type comprising an emitter BE1, BE2 comprising a plurality of aligned laser LEDs transmitting parallel light beams LB1, LB2 in the infrared band, for example centered on 870 nm, and a receiver BR1, BR2 comprising a plurality of aligned photodiodes sensitive to the light emitted by the LEDs of the emitters BE1, BE2. The emitters BE1, BE2 and receivers BR1, BR2 are installed in the machine 1 such that each photodiode of each optical barrier B1, B2 receives the light emitted by one LED of the emitter of the same optical barrier. The distance or pitch between the LEDs or photodiodes of the optical barrier B1 can be chosen to be equal to 2 cm (defined with an accuracy of less than 10%) to detect objects at least as small as a human hand. The distance or pitch between the LEDs or photodiodes of the optical barrier B2 can be chosen to be equal to 1 cm (defined with an accuracy of less than 10%) to detect objects at least as small as a finger of a human hand.

Figure 4 shows a state and transition diagram reflecting the behavior of the control unit CU, according to an embodiment. The operation of the control unit comprises states OP, AL1 and AL2. In the operational state OP, the machine 1 and the optical barriers B1, B2 are active and operational. Upon occurrence of an event DT1 corresponding to the detection of an object across the optical barrier B1, the control unit passes from the operational state OP to the first alert state AL1. In the first alert state AL1, the control unit CU triggers the emission of a first alert signal (e.g. a light or audible signal). If the detection of an object disappears (occurrence of event D̅T̅1̅), the control unit CU returns to the state OP. In the first alert state AL1, if the optical barrier B2 detects an object (occurrence of event DT2), the control unit CU passes from the first alert state AL1 to the second alert state AL2. It could be observed that due to the respective positions of the optical barriers B1, B2 and the machine 1, an object detected by the barrier B2 is necessarily detected by barrier B1.

In the second alert state AL2, the control unit CU stops the machine 1 by sending a stop signal to the control unit MC. In this state, the control unit CU can also trigger the emission of a second alert signal (e.g. a light or audible signal) distinct from the first alert signal. However, such a second alert signal may be not necessary since when the optical barrier B2 detects an object, the optical barrier B1 necessarily detects this object and trigger the emission of a first alert signal. In the state AL2, the control unit CU can return to the operational state OP, provided that the optical barriers B1, B2 do not detect any object (occurrence of events D̅T̅1̅ and D̅T̅2̅). In addition, to return to the operational state OP, it may be required that the operator activates the reset switch SW1 (occurrence of event SW1) and to restart the machine 1 triggering an event SP which is signaled by the machine 1 to the control unit CU. The activation of the reset switch SW1 stops the emission of the alert signals if no object is detected by the optical barriers B1, B2.

The first alert state AL1 is provided to signal to the operators when they or their hand is too close to the hazard area of the machine 1 and too close from the optical barrier B2. The second alert state AL2 prevents injury to the operators due to an unintentional intrusion into the hazard area of the machine.

According to an embodiment, the control unit CU can take a mute state MU in which the optical barrier B2 do not raise the detection events DT2 even when an object is detected across the optical barrier B2. In the state MU, the machine 1 remains active and operational. The transition between the states OP and MU can be triggered by an operator by means of the switch SW2 and/or subsequent to activation of a swabbing cycle by a swabbing robot SR. The mute state MU can also be activated when the swabbing robot SR is detected in a safety zone SZ around the opening 2 of the glass forming machine 1. In the state MU, when the switch SW2 is activated by an operator or when the swabbing robot SR leaves the safety zone SZ, the control unit CU returns in the operational state OP. For this purpose, the control unit CU can be set in communication with the swabbing robot SR to acquire the position of the latter or a signal RB/ R̅B̅ indicating whether the robot is in the safety zone SZ or not. The mute state MU can also be useful for the glass operators to operate in a running glass forming section, for example to perform a manual swabbing operation or to manually check the temperature of the blank or blow mold, e.g., using a pyrometer. In the mute state MU, since the optical barrier B1 is not deactivated, an alert signal is emitted when an object is detected by the barrier B1. An alert signal such as a light signal can be emitted to signal to the glass operators that the optical barrier B2 is deactivated.

In this manner, maintenance operations in a running machine or section can be performed as if there were no protection.

According to an embodiment, only the optical barrier B2 is deactivated in the mute state. Therefore, the optical barrier B1 still triggers an alert signal when it detects an object, and thus alerts the operator when it operates in the machine.

According to an embodiment, a maintenance state MN is defined that differs from the mute state MU only by the running state MO / M̅O̅ of the glass forming machine 1 which is completely stopped (signal M̅O̅ active) in the maintenance state. The control unit CU is configured to pass from the operational state OP to the maintenance state MN upon detection that the machine 1 is stopped, and to return to the operational state OP when the machine 1 is activated (signal MO active). When the signal MO is detected, the control unit CU activates the optical barriers B1, B2. In the maintenance state, it may be considered that the warning signal that can be emitted in the mute state is not necessary.

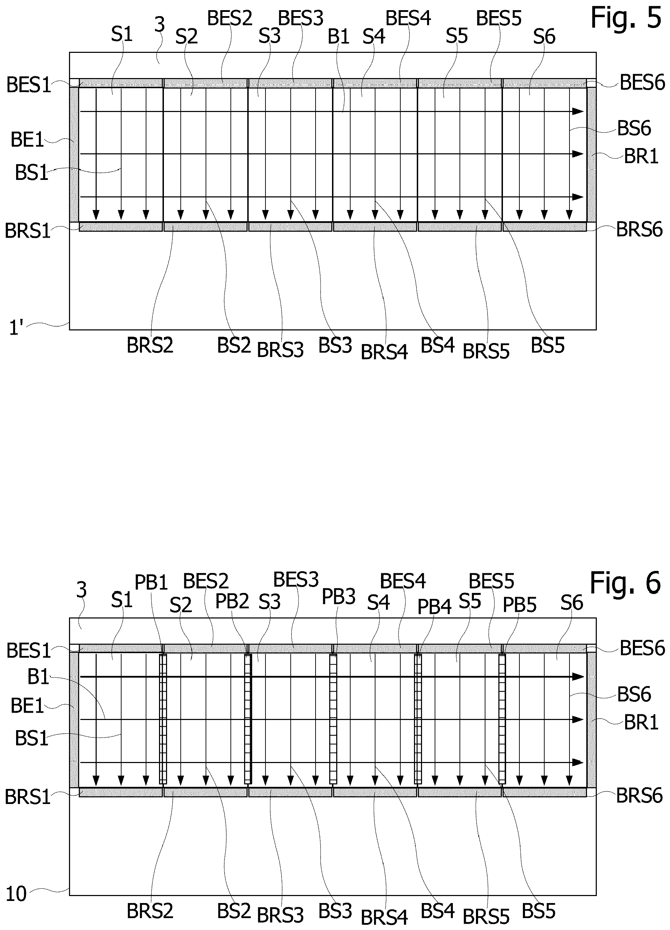

Figure 5 shows an IS machine 1' with a plurality of glass forming sections S1, S2, ..., S6. According to an embodiment, the protection system equipping the machine 1' differs from the protection system equipping the machine 1 as shown in Figure 2 in that the optical barrier B2 is replaced by a plurality of optical barriers BS1, BS2, ..., BS6, i.e., one optical barrier BS1-BS6 for each glass forming section S1-S6 of the machine 1'. Each of the optical barriers BS1-BS6 comprises a respective optical emitter BES1, BES2, ..., BES6 and a respective optical receiver BRS1, BRS2, ... BRS6. In the example of Figure 5, the optical emitter BSE1-BSE6 and the optical receiver BRS1-BRS6 of each glass forming section S1-S6 are installed along respectively the upper and lower sides of an opening of a respective section S1-S6. The emitters and receivers of all the optical barriers B1, BS1-BS6 are connected to the control unit CU (in the manner of optical barriers B1 and B2 as shown in Figure 2).

The behavior of the control unit CU connected to the machine 1' can follow the state and transition diagram of Figure 4. The control unit CU switches from the first alert state AL1 to the second alert state AL2 when at least one of the optical barriers BS1-BS6 detects an object. In the state AL2, the control unit CU only stops the glass forming section(s) S1-S6 corresponding to the optical barrier(s) BS1-BS6 that has (have) detected an object. In addition, the control unit CU can switch from the state AL2 to the state OP only when none of the optical barriers B1, BS1-BS6 detects an object. Further, in the mute state MU, only the optical barrier B1 is active or the control unit CU does not switch to the alert state AL2 even when an object is detected by the optical barriers BS1-BS6. In addition, the mute state MT can be triggered by an operator by pressing a dedicated button for only one section S1-S6.

Thanks to these dispositions, when an object is detected by one the optical barriers BS1-BS6, only the corresponding glass forming section S1-S6 is stopped, the other sections S1-S6 remaining in operation.

According to another embodiment, the IS machine 1' is equipped with the optical barrier B2 which provides upon detection to the control unit CU a position signal representative of a position along the optical receiver BR2, where an object is detected across the optical barrier B2. The control unit CU is configured to determine which glass forming section S1-S6 is to be stopped as a function of this position signal, and to selectively stop only the determined glass forming section S1-S6.

According to still another embodiment, the IS machine 1' is equipped with a single optical emitter BE2 and one optical receiver BRS1-BRS6 for each glass forming section S1-S6, such that the control unit CU can stop only the section S1-S6 corresponding to the receiver BRS1-BRS6 that detects an object.

Figure 6 shows an IS machine 10 with a plurality of glass forming sections S1-S6. The IS machine 10 of Figure 6 differs from the IS machine 1' of figure 5 in that it comprises physical barriers or shields PB1-PB5 separating the internal spaces of the sections S1-S6. The physical barriers PB1-PB5 are disposed behind the optical barriers B1, BS1-BS6 so as to not interfere with them. The physical barriers PB1-PB5 prevent an operator from being accidentally in contact with a functioning mechanical equipment in a section Si (i = 1, ...6) that is not stopped from an adjacent section Si-1 or Si+1 that is stopped, without crossing the optical barrier BSi of the section Si that is not stopped. In addition, the physical barriers PB1-PB5 prevent an operator operating in a stopped section from accidentally crossing the optical barrier BS1-BS6 of the adjacent section.

The above description of various embodiments is provided for purpose of description to one of ordinary skills in the related art. It is not intended to be exhaustive or to limit the scope of the present disclosure solely to the disclosed embodiments. Numerous alternatives or variations to the present disclosure will be apparent to those of ordinary skills in the related art. Accordingly, while some alternatives or embodiments have been presented specifically, other embodiments will be apparent or easily developed by those of ordinary skills in the related art. Limitations in the appended claims should be interpreted broadly based on the language used in the claims and such limitations should not be restricted to the specific examples described above.

In this respect, it is apparent to those of ordinary skills in the related art that all the possible combinations of the above-disclosed embodiments belong to the present disclosure.

## Claims

1. A method for protecting operators controlling a glass forming machine (1, 1'), the method comprising:
setting in an operational state (OP) a first optical barrier (OB, B2, BS1-BS6) of the glass forming machine, the first optical barrier being arranged in front of at least a part (2, S1-S6) to be protected of the glass forming machine; and
triggering a first alert state (AL2) when the first optical barrier is in the operational state and detects an object, the first alert state comprising stopping the part of the glass forming machine.

2. The method of claim 1, further comprising:
setting in the operational state (OP) a second optical barrier (B1) arranged in front of the part (2, S1-S6) to be protected of the glass forming machine (1, 1'), the first optical barrier (B2, BS1-BS6) being disposed between the glass forming machine and the second optical barrier; and
triggering a second alert state (AL1) when the second optical barrier (B1) is in the operational state and detects an object.

3. The method according to claim 2, wherein the second alert state (AL1) comprises emitting a second alert signal that possibly comprises a dedicated audible signal and/or a dedicated light signal.

4. The method of claim 2 or 3, wherein the second optical barrier (B1) is configured to detect objects having a minimum size of 2.5 cm.

5. The method of one of claims 1 to 4, wherein the first alert state (AL2) further comprises restarting the glass forming part (2, S1-S6) when no object is detected by the first optical barrier, upon triggering of a reset command (SW1) of the first optical barrier (B2) and/or triggering of a start command of the glass forming part.

6. The method according to one of claims 1 to 5, further comprising:
setting in the operational state (OP) each of optical barriers of an optical barrier set (BS1-BS6) comprising a plurality of optical barriers and the second optical barrier (B1), each optical barrier of the optical barrier set being arranged in front of a respective glass forming section (S1-S6) of the glass forming machine (1') and between the second optical barrier (B1) and the respective glass forming section; and
triggering the first alert state (AL2) when an object is detected by one optical barrier (BS1-BS6) in the operational state of the optical barrier set (BS1-BS6), the first alert state comprising stopping the glass forming section corresponding to said one optical barrier.

7. The method according to one of claims 1 to 6, further comprising configuring each first optical barrier (B2, BS1-BS6) to detect objects having a minimum size between 1.4 cm and 3 cm.

8. The method according to one of claims 2 to 7, further comprising a mute state (MU) in which the glass forming machine (1, 1') is in operation and the first alert state (AL2) is not triggered when an object is detected by the first optical barriers (B2, BS1-BS6).

9. The method of claim 8, further comprising:
activating or deactivating the mute state (MU) upon detection of manual action on a switch (SW2), or
detecting a swabbing robot (SR) in a safety zone (SZ) around the glass forming machine (1, 1');
activating the mute state when the swabbing robot is in the safety zone;
detecting that the swabbing robot is out of the safety zone; and
setting the first and second optical barriers (B2, BS1-BS6, B1) in the operational state when the swabbing robot is detected out of the safety zone.

10. The method according to one of claims 2 to 9, further comprising setting the glass forming machine (1, 1') in a maintenance state, the maintenance state comprising stopping the glass forming machine and setting the first optical barriers (B2, BS1-BS6) in a deactivated state in which the first alert state (AL2) is not activated when an object is detected by one first optical barrier.

11. A system for protecting operators controlling a glass forming machine (1, 1'), the system comprising an optical barrier set (OB, B1, B2, BS1-BS6) comprising at least a first optical barrier (OB, B2, BS1-BS6), each first optical barrier being arranged in front of an opening (2) of the glass forming machine, and a control unit (CU) connected to each optical barrier of the optical barrier set and configured to implement the method of one of claims 1 to 10.

12. The system of claim 11, wherein the optical barrier set comprises at least a first optical barrier (B2, BS1-BS6) disposed in front of an opening of each of glass forming sections (S1-S6) of the glass-forming machine (1', 10).

13. The system of claim 11 or 12, wherein the optical barrier set comprises at least a first optical barrier (B2, BS1-BS6) comprising an emitter (BE2, BES1-BES6) and a receiver (BR2, BRS1-BRS6) that are disposed facing each other along opposite sides of an opening (2) of the glass forming machine (1) or along opposite upper and lower sides of an opening of a respective glass forming section (S1-S6) of the glass forming machine (1').

14. The system of one of claims 11 to 13, wherein the optical barrier set comprises a second optical barrier (B1) disposed in front of all glass forming sections (S1-S6) of the machine, the first optical barrier being disposed between the glass-forming machine and the second optical barrier.

15. The system of claim 14, wherein the second optical barrier (B1) comprises an emitter (BE1) and a receiver (BR1) that are disposed facing each other along opposite lateral sides of the opening (2) of the glass-forming machine (1, 1').

16. The system of one of claims 11 to 15, comprising first optical barriers (BS1-BS6) respectively disposed in front of openings of glass forming sections (S1-S6) of the glass-forming machine (10), and physical barriers (PB1-PB5) disposed between the glass-forming sections.
